# EUROPEAN PATENT SPECIFICATION

(11) **EP 1 635 151 B1**
(45) Date of publication and mention of the grant of the patent: **07.12.2016**
(21) Application number: 05012471.8
(22) Date of filing: 09.06.2005
(51) Int. Cl.: G01F 1/50, G01F 15/12, G01F 1/46, G01F 15/00

(54) **A device for measuring and regulating the flow rate of aeriform emissions containing dust and droplets**
Vorrichtung zur Durchflussmessung und -regulierung von Staub und Tropfen enthaltenden luftförmigen Emissionen
Dispositif pour la mesure et le contrôle du débit d'émissions aériformes contenant de la poussière et des gouttes

(30) Priority: 15.06.2004 IT MI20041195
(43) Date of publication of application: 15.03.2006
(73) Proprietor: Franceschi Fabio, 20148 Milano (IT)
(72) Inventor: Franceschi, Fabio, 20148 Milano (IT)
(74) Representative: Beneduce, Gianna

(56) References cited:
- EP-A- 0 777 109
- DE-A1- 3 800 486
- US-A- 4 312 234
- US-A- 5 036 711
- US-A1- 2002 178 837
- US-B1- 6 321 166

## Description

### Brief description of the invention

The present invention relates to a device for measuring and regulating, at ambient temperature, the flow rate of aeriform emissions emitted by industrial plants, which contain dust and droplets.

### State of the Art

It is known that airflow emissions, containing steam, dust and droplets from an industrial plant into the atmosphere, must conform to precise legal regulations regarding both the flow rate of air and the polluting contents in the form of dust and droplets. At the same time the airflow rate must not be lower than a set, minimum level so as not to compromise the healthiness of the working environment within industrial plants.

Legal regulations provide, as well as acceptable flow rate levels and polluting content, also the tolerances both for excessive airflow rates, which must not generally exceed 10% of the established level, also for too low airflow rates which generally must not be below 10% of the established levels: the maximum value (+10%) is aimed at safeguarding the environment outside the industrial plant, while the minimum value (-10%) is aimed at safeguarding the working environment within the industrial plant, particularly in a painting plant.

To eliminate polluting agents (in the form of dust and droplets), the industrial plant is equipped with suitable static mechanical filters to separate said dust and droplets before the air is emitted into the outside atmosphere of the industrial plant.

The airflow rate, based on the pollution regulations, should be maintained at a constant level, but this is made problematic just by the presence of said mechanical filters which, instead, cause its variability due to the resistance of the air passing through them. Said variability is a function of the dirtiness level present in the filters. It is obvious, in fact, that with clean filters the resistance, or pressure drop, is minimum, and thus the airflow rate is maximum, while with obstructed filters the resistance, or pressure drop, is maximum and thus the airflow rate is minimum.

It is known that the measure of gaseous flow rate passing through a duct is based on flow velocity, said velocity being measured on the basis of dynamic pressure exerted by the gaseous flow against a suitable instrument inserted inside the duct, said resulting dynamic pressure being the difference between the total pressure exerted by the gaseous flow against said instrument and the static pressure existing in the duct, considering constant temperature and pressure inside the duct and ignoring the humidity content.

One of the most known instruments for measuring dynamic pressure in a duct through which passes a gaseous flow is the Pitot tube which is not described here.

Being also known that the velocity of a gaseous flow passing internally through a duct is maximum in proximity to the axis of same and minimum in proximity to the walls and said velocity is further influenced by curves present in the duct and by internal obstacles which cause harmful turbulence, to measure with precision it is necessary to effect several measurements in different points of the section of the duct then make an appropriate average.

The measuring instruments for gaseous flow rate are generally based on the Pitot tube principle and do not give a satisfactory measurement (that is to say with minimum acceptable errors from the industrial point of view) unless an increased number of measurements is effected.

Devices do exist, however, which reduce the number of measurements, but which are quite complicated and/or introduce turbulence that, equal with operating conditions, alter the measurement of the flow rate. One of these devices comprises a Wilson grid (Construction CPD Certification Service: "How to determine air flow" by G.J. Matthews, page 19) which comprises a grid, equipped with suitable holes, tubes inserted in a duct through which passes a gaseous flow of which it measures the dynamic pressure. The disadvantage of this device consists in the fact that said grid noticeably reduces the section of passage of the flow thus increasing its velocity, but, above all, introduces turbulence which causes an inconsistent measurement with the same operating conditions.

Another device for measuring the flow rate of a gaseous flow within a duct is that described in the USA patent 3,733,900 which measures the flow rate by means of two crosses equipped with suitable holes, inserted in series in the duct. Since the two crosses introduce an undesirable turbulence, the device provides, upstream said cross, a static honeycomb pack in aluminium or other rigid material, with the aim of rectifying the streams of the gaseous flow.

In both of these examples, possible dust and droplets drawn by the gaseous flow can partially or totally obstruct said holes and reduce the section of the static honeycomb pack with evident alteration of the velocity of flow, giving thus a completely unreliable flow rate measurement.

US Patent Application Publication 2002/178837 discloses a fluid velocity measuring device which takes measurement of velocity at multiple points in a plane perpendicular to the direction of the fluid flow. Said fluid velocity measuring device comprises a plurality of total pressure holes and a plurality of static pressure holes.

### Description of the Invention

The present invention comprises a device according to claim 1 for measuring and regulating the flow rate of aeriform emissions, e.g. at ambient temperature, containing humidity, dust and droplets, emanating from industrial plants, particularly from painting plants.

The advantages of the device of the invention are represented by the fact that it overcomes the inconveniences of existing devices and particularly by the fact that the measurement of the flow rate is substantially precise and constant, even in the presence of humidity, dust and droplets throughout the life cycle of the filter, that is to say from when it is inserted, clean, in the duct and when it is replaced because it is completely dirty.

This characteristic is achieved by means of the possibility of automatically increasing the number of revolutions of the fan, that sends the air into the duct, and also by the possibility of effecting, by means of clean air, the washing of the probe that takes the dynamic pressure inside the duct.

The revolution number of the fan is varied automatically, based on an electric/electronic signal from a differential pressure transducer (dynamic pressure) while the washing of the probe is effected, automatically, at prefixed times and duration.

A further advantage of the present invention comprises the fact that the probe inserted in the duct, which takes the dynamic pressure, has an aerodynamic shape, so reducing turbulence. Furthermore this is of easy construction, and therefore costs little, being manufactured in suitable materials such as plastics, composites and extruded aluminium alloy.

The probe has a constant section that is applied to both small and large ducts (both of circular and square section): only its length varies.

A further advantage of the device of the invention comprises the fact that, once the probe is installed, it can be simply and appropriately oriented in order to further reduce the formation of turbulence.

### Detailed description of the drawings

For a simpler description of the device the invention refer to the attached drawings, not to scale, that in no way limit the invention.

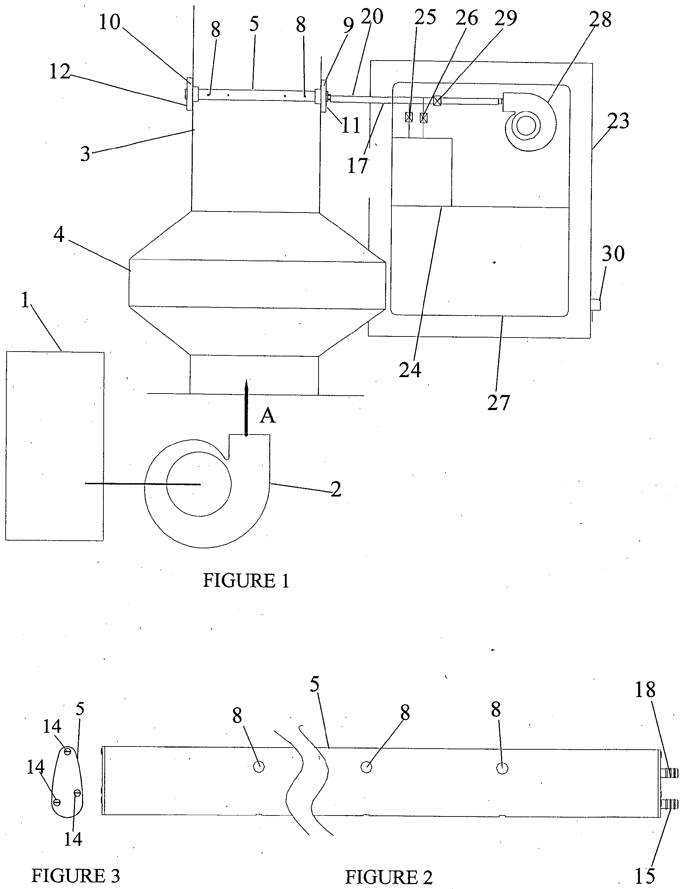

Fig. 1 is a diagram, partially in blocks, of the device of the invention;
Fig. 2 is a front view of the probe of the device of the invention;
Fig. 3 is a lateral view, from the left with respect to Fig. 2, of the probe of the device of the invention;
Fig. 4 is a cross section of the probe for illustration purposes only;
Fig. 5 is a top view of the probe of the device of the invention, inserted in a duct with circular-section;
Fig. 6 is an exploded view of one of the probe's two fixing bushes to the duct and of one of the two regulating plates;

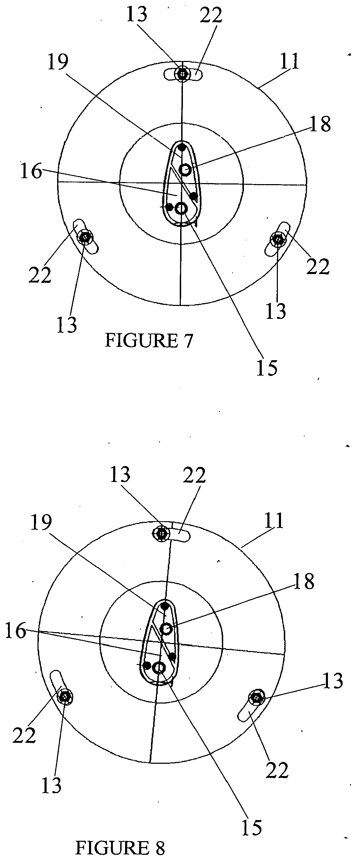

Fig. 7 is a lateral view, from the right with respect to Fig. 2, of the probe and of the regulating plate with their vertical axis parallel to the vertical axis of the duct;
Fig. 8 is a lateral view of the probe and of the regulating plate with their vertical axis slightly rotated with respect to the axis of the duct; and

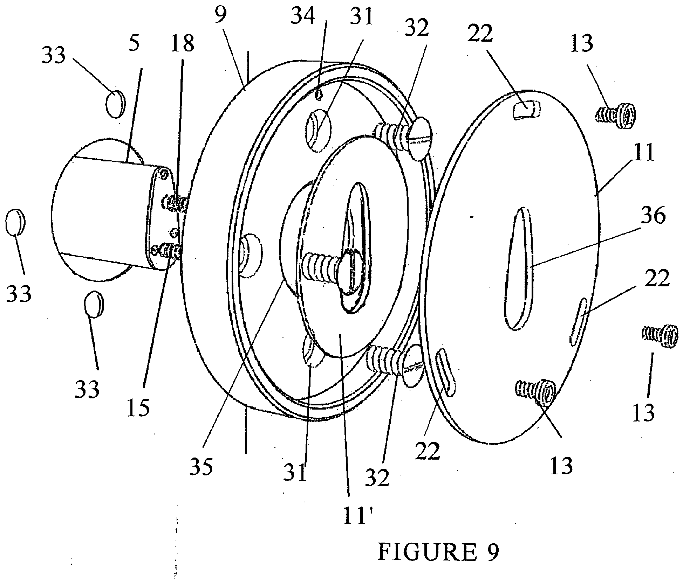

Fig. 9 is the exploded, perspective view of Fig.6.

In said Figures is shown: the industrial plant (1); the suction fan (2) which sends the air into the duct (3), equipped with filter (4), in which flows, in the direction of the arrow A, the airflow sent from the fan (2); the probe (5) of appropriate length with an appropriate number of holes (6) for the taking of the total pressure (static plus dynamic) equipped with wide bevels (7) and a sufficient number of holes (8), for the taking of the only static pressure, all said holes being perpendicular to the probe surface at the point in which they are applied; the fixing bushes (9) and (10) of the probe (5) to the duct (3) provided with through holes (31) to house the screws (32) which are inserted in the corresponding threaded holes (33) placed on the duct (3), with the threaded holes (34) for the coupling bush (9) /plate (11) by means of the screws (13), and with a central, circular aperture (35) suitable for the passage of the probe (5); the regulating plates (11) and (12) for rotating the probe (5) around its longitudinal axis provided with a central aperture (36) having the same profile as the cross section of the probe (5), in which aperture (36) the latter is inserted on assembly to be able to realize the rotation thereof; the screws (13) to effect the rotation of the probe (5); the flat gaskets (11') and (12') having a central aperture and, preferably, being made of rubber, interposed between the couplings bush (9)/plate (11) and bush (10)/plate (12) respectively; the screws (14) of the terminal enclosures of the probe (5); the total pressure socket (15) of the lower chamber (16) of the probe (5) for the insertion of the flexible tube (17); the static pressure socket (18) of the upper chamber (19) of the probe (5) for the insertion of the flexible tube (20); the two chambers (16) and (19) of the probe (5) being separated from each other by the partition baffle (21); the slots (22), three for each of the regulating plates (11) and (12), positioned at 120° between them and set along a circumference of said regulating plates (11) and (12); the container (23) in which are housed the control component; the differential pressure transducer (24); the block valves (25) and (26) placed respectively on the flexible tubes (17) and (20) that respectively connect the lower chamber (16) of the probe (5) and the upper chamber (19) of the probe (5) with the transducer (24); an electronic/electric control circuit (27); the air fan (28); the block valve (29), placed in the delivery of said fan (28); and, in the end, an outlet (30) for an electric signal generally 0-10 V or 4-20 mA.

In the container (23) are inserted further elements of the electronic/electric circuit (switches, fuses, warning lamp) and an inverter connected to the motor of the fan (2), not shown in the Figures.

### Description of some preferred embodiments of the Invention

As above stated, the fundamental characteristic of the device object of the present invention comprises its ability to be used even with humid air that carries dust and droplets, with the result of a precise measurement of the flow rate of air and with the possibility to maintain constant said flow rate of air during the whole life cycle of the filter (4) inserted in the duct (3), that is either with a clean filter or with an ever increasingly dirty filter.

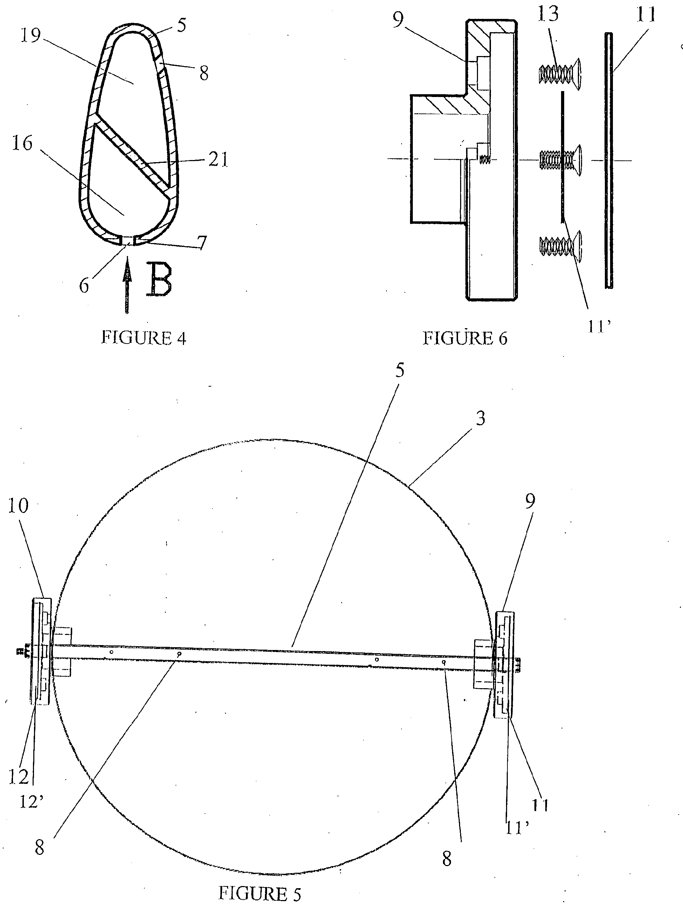

This important characteristic is principally due to the probe (5). It is realized with an aerodynamic profile as well shown in Fig. 4 in which the arrow B indicates the direction of the airflow that acts on the probe (5), particularly in the lower chamber (16), a total pressure equal to the sum of the static pressure plus the dynamic pressure.

The advantage rising from the aerodynamic profile comprises the reduction of turbulence in the proximity of, in particular, the holes (8) for taking the static pressure. To further improve the stability of the measurement signal, the probe (5) is held in place by the two circular, regulating plates (11) and (12) that allow its rotation around its horizontal axis.

The system of the two adjustable plates is used in the setting up of the device: the probe is caused to rotate around its horizontal axis until a signal is obtained, and thus a correct measurement of flow rate, with an almost zero oscillation. Given that the rotation could place the axis of the total pressure holes (6) in a non parallel position in respect to the direction B of the airflow, it is carried out, by means of milling, a wide bevel (7) which minimises the thickness of the intake holes (6) making irrelevant their axial orientation with respect to the airflow direction B.

A further advantage of the device of the invention is represented by an important characteristic of the probe (5): this comprises the fact that the partition baffle (21), that separates the two chambers, total pressure (16) and static pressure (19), is inclined with respect to the vertical axis of the probe (5). By means of inclination of the probe (5), the position in which the static pressure holes (8) are made, can be chosen along a very long length (right wall in Fig. 4). In cases of turbulence, after an initial measurement with a standard probe, it will be possible to realize a probe with static pressure holes (8) in a position more suitable for minimum turbulence and thus stabilize, to a high degree, the measurement of the flow rate.

Another further advantage of the device of the invention comprises the fact that the holes of the probe (5), both the total pressure holes (6) and the static pressure holes (8) can be flushed automatically, with preset frequency and duration, by means of a flow of clean air, drawn from the exterior of the industrial plant. This prevents said holes from becoming obstructed, even only partially, by dust carried in the air, obstruction which is facilitated by the presence of humidity and droplets. The blocking of staid holes could falsify the measurement of flow rate and also render the probe (5) totally ineffective.

In an alternative embodiment the fan (28)- can be eliminated and substituted with another air pressure supply such as a pressure reducer to be connected to the compressed air network.

On using the device, in order to measure the flow rate of humid air, also containing dust or droplets, coming from an industrial plant, e.g. a painting plant, and in order to maintain constant said flow rate during the lifetime of the filter (4), after having completed an initial measurement with a standard probe, a probe (5) of appropriate length, which is positioned along a diameter of the section of the duct (3), if circular, or along an axis of the section of the duct (3), if square, or along the greatest axis in the case of rectangular section, is introduced.

With the static pressure holes (8) suitably positioned, the probe (5) is caused to rotate, by means of the regulating plates (11) and (12), into the position of maximum stability of measurement of airflow rate, releasing the screws (13) in the slots (22).

The flexible tubes (17) and (20) connect respectively the lower, total pressure chamber (16) and the upper, static pressure chamber (19) of the probe (5) with the pressure differential transducer (24) (dynamic pressure).

In clean filter (4) conditions said pressure difference is maximum and reduces as the filter (4) gets dirtier and so increases the resistance to the air passing through it.

The transducer (24) generates an electronic/electric signal proportional to said difference which then reduces with the increase of dirt in the filter.

Said signal is used as a retroactive signal by an inverter, equipped with PID circuit that supplies the motor of the fan (2) with the frequency and voltage sufficient to maintain constant the of airflow rate sent from the fan (2) to the duct (3) .

The signal coming from the transducer (24), and being sent to the inverter, is maintained by a control circuit (27), e.g. PLC, for a time T which is preset to user requirements according to the characteristics of the device (typically from 30 to 60 minutes).

The two valves (25) and (26), after a period of programmable reading time (typically from 30 to 60 seconds) close. After an interval of 10 seconds the valve (29) opens and causes connection between the probe (5), the fan (28) or the compressed air circuit, by means of the flexible tubes (17) and (20).

The pressure supplied by the fan (28) or from the compressed air network will be greater than the total pressure of a value such as to induce in the probe (5) an airflow such as to impede the ingress of dusty air into the probe itself.

At every successive reading (closure of the valve (29) and opening of the valves (25) and (26)) the transducer (24) will supply a new value that will adjust the number of revolutions of the fan (2). The PLC will be programmed in a way to adjust the time T to the evolution of the read value: if one reading is equal to the preceding reading, the time T is increased by a percentage P₁; if one reading is lower than the preceding reading, the time T is reduced by a percentage P₂, said percentages being adjustable by the user.

On reaching the maximum pre-established frequency supplied by the inverter the device loses its capacity to regulate itself and it is necessary to substitute or clean the filters.

The device signals this eventuality by means of a warning light placed on the control panel and/or an analogical signal.

A further example of the device provides that it can function even without the valves (25), (26) and (29) with a constant pressure circuit and zeroing of the signal coming from the transducer (24) by means of the PLC. In this case the air pressure for cleaning is lowered, at programmable intervals, until balanced with the dynamic pressure. This value is memorised by the PLC as a retroactive value.

The device of the invention finds a further application in the measurement of wind velocity, when installed in a meteorological station.

In such application the probe (5) is placed vertically and the measurement values are reliable even in the presence of airborne dust (e.g. in a storm).

Applying a weathercock to the probe (5) will enable simultaneous readings of the wind direction.

The wind speed and direction values are, as known, also recorded.

## Claims

1. A device for measuring and regulating the flow rate of aeriform emissions coming from an industrial plant which comprises a probe (5); two fixing bushes (9, 10) provided with through holes (31), threaded holes (34) and screws (32), said fixing bushes (9, 10) bearing a central aperture (35); said device further comprising two regulating plates (11, 12), said regulating plates (11, 12) being provided with screws (13) and bearing a first central aperture (36) having the same profile as the cross section of the probe (5) and slots (22) set along one of their circumferences, the respective couplings between bushes (9, 10) and regulating plates (11, 12) being provided with gaskets (11', 12'), respectively, comprising a second central aperture corresponding to said first central aperture (36) of said regulating plates (11, 12); said device further comprising a pressure differential transducer (24) and an electronic control circuit (27) wherein the transducer (24) and the electronic control circuit (27) are set in the interior of a container (23) that supports an outlet (30) of an electric signal, wherein the probe (5) carries a plurality of total pressure holes (6), set on its front surface with respect to the aeriform flow direction, said total pressure holes (6) are equipped with wide bevels, and a plurality of static pressure holes (8), set on a lateral surface with respect to the direction of the flow, all said total pressure and static pressure holes (6) and (8) being perpendicular to the surface of the probe (5) at the point at which they are applied, and wherein said probe (5) is closed at both its ends, one of which being equipped with two sockets (15, 18), and wherein the probe (5) carries a partition baffle (21) that creates two chambers (16, 19) not connected to each other but connected, through flexible tubes (17, 20) on which block valves (25, 26) are set, to the transducer (24); wherein the fixing bushes (9, 10) and the regulating plates (11, 12) form together a rotating system of the probe (5) which rotates in respect to the air flow direction; wherein a flushing airflow source is selected from a fan (28) set inside the container (23), or an airflow source connected to the exterior of the device; wherein valves (25, 26, 29) are set inside the container (23) and wherein the outlet (30) of the electric signal is used as a retroaction signal by an inverter, equipped with a PID controller, said PID controller controlling a fan (2).

2. The device according to claim 1, **characterized in that** the partition baffle (21) of the probe (5) has its axis inclined with respect to the vertical (36) axis of the probe (**5**).

3. The device according to claim 1 or 2, **characterized in that** the probe (5) is realized in materials selected from plastics, composites and extruded aluminium alloy.

4. The device according to anyone of claims 1 to 3, **characterized in that** the slots (22) are three in number, set at 120 along a circumference of the regulating plates (11, 12).

5. The device according to anyone of claims 1 to 4, **characterized in that** the flushing airflow source comprises a fan (28) set inside the container (23) .

6. The device according to anyone of claims 1 to 4, **characterized in that** the flushing airflow source comprises a network exterior to the

## Patentansprüche

1. Vorrichtung zum Messen und Regeln der Strömungsrate luftförmiger Emissionen aus einer Industrieanlage, die eine Sonde (5); zwei Befestigungshülsen (9, 10), die mit Durchgangsöffhungen (31), Gewindebohrungen (34) und Schrauben (32) versehen sind, aufweist, wobei die Befestigungshülsen (9, 10) eine zentrale Öffnung (35) tragen; wobei die Vorrichtung ferner zwei Regulierungsplatten (11, 12) aufweist, wobei die Regulierungsplatten. (11, 12) mit Schrauben (13) versehen sind und eine erste zentrale Öffnung (36) tragen, die dasselbe Profil aufweist wie der Querschnitt der Sonde (5) und Nuten (22), die entlang einer ihrer Umfange angeordnet sind, wobei die jeweiligen Kupplungen zwischen den Hülsen (9, 10) und den. Regulierungsplatten (11, 12) jeweils mit Dichtungen (11°, 12') versehen sind, die eine zweite zentrale Öffnung aufweisen, die der ersten zentralen Öffnung (36) der Regulierungsplatten (11, 12) entspricht; wobei die Vorrichtung ferner einen Differenzdruckrnessumformer (24) und eine elektronische Steuerschaltung (27) aufweist, wobei sich der Messumformer (24) und die elektronische Steuerschaltung (27) im Inneren eines Behälters (23) befinden, der einen Ausgang (30) eines elektrischen Signals trägt, wobei die Sonde (5) eine Mehrzahl an Gesamtdrucköffnungen (6) aufweist, die bezüglich der luftförmigen Strömungsrichtung auf ihrer vorderen Oberfläche angeordnet sind, wobei die Gesamtdrucköffnungen (6) mit langen Fasen und einer Mehrzahl an statischen Drucklöchern (8), die sich auf einer lateralen Oberfläche im Verhältnis zu der Strömungsrichtung befinden, ausgestattet sind, wobei alle Gesamtdrucklöcher und statischen Drucklöcher (6) und (8) an dem Punkt, an dem sie angewendet werden, rechtwinklig zu der Oberfläche der Sonde (5) sind, und wobei die Sonde (5) an ihren beiden Enden geschlossen ist, wobei eines mit zwei Sockeln (15, 18) versehen ist, und wobei die Sonde (5) ein Trennblech (21) trägt, das zwei Kammern (16, 19) schaft, die nicht miteinander verbunden sind, aber durch flexible Röhren (17, 20), in denen sich Absperrventile (25, 26) befinden, mit dem Messumformer (24) verbunden sind; wobei die Befestigungshülsen (9, 10) und die Regulierungsplatten (11, 12) zusammen ein rotierendes System der Sonde (5) bilden, das bezüglich der Luftströmungsrichtung rotiert; wobei eine Spülungs-Luftströmungsquelle aus einem Lüfter (28), der sich im Inneren des Behälters (23) befindet, oder einer Luftströmungsquelle, die mit dem Bereich außerhalb der Vorrichtung verbunden ist, ausgewählt wird; wobei sich Ventile (25, 26, 29) im Inneren des Behälters (23) befinden und wobei der Ausgang (30) des elektrischen Signals durch einen Wechselrichter, der mit einer PID-Steuerung ausgestattet ist, als ein Rückwirkungssignal verwendet wird, wobei die PID-Steuerung einen Lüfter (2) steuert.

2. Vorrichtung nach Anspruch 1, **dadurch gekennzeichnet, dass** bei dem Trennblech (21) der Sonde (5) die Achse bezüglich der vertikalen Achse der Sonde (5) geneigt ist.

3. Vorrichtung nach Anspruch 1 oder 2, **dadurch gekennzeichnet, dass** die Sonde (5) aus Materialien besteht, die aus Plastik, Verbundstoffen und einer extrudierten Aluminiumlegierung ausgewählt werden.

4. Vorrichtung nach einem der Ansprüche 1 bis 3, **dadurch gekennzeichnet, dass** die Nuten (22) in einer Anzahl von drei vorhanden sind und in 120° entlang eines Kreisumfangs der Regulierungsplatten (11, 12) angeordnet sind.

5. Vorrichtung nach einem der Ansprüche 1 bis 4, **dadurch gekennzeichnet, dass** die Spülungs-Luftströmungsquelle einen Lüfter (28) aufweist, der sich im Inneren des Behälters (23) befindet.

6. Vorrichtung nach einem der Ansprüche 1 bis 4, **dadurch gekennzeichnet, dass** die Spülungs-Luftströmungsquelle ein Netzwerk außerhalb der Vorrichtung aufweist.

## Revendications

1. Dispositif pour mesurer et réguler le débit d'émissions aériformes provenant d'une usine industrielle qui comprend une sonde (5) ; deux manchons de fixation (9, 10) prévus avec des trous traversants (31), des trous filetés (34) et des vis (32), lesdits manchons de fixation (9, 10) portant une ouverture centrale (35) ; ledit dispositif comprenant en outre deux plaques de régulation (11, 12), lesdites plaques de régulation (11, 12) étant prévues avec des vis (13) et portant une première ouverture centrale (36) ayant le même profil que la section transversale de la sonde (5) et des fentes (22) placées le long de l'une de leurs circonférences, les couplages respectifs entre les manchons (9, 10) et les plaques de régulation (11, 12) étant prévus avec des joints (11', 12') respectivement, comprenant une seconde ouverture centrale correspondant à ladite première ouverture centrale (36) desdites plaques de régulation (11, 12) ; ledit dispositif comprenant en outre un transducteur de pression différentielle (24) et un circuit de contrôle électronique (27), dans lequel le transducteur (24) et le circuit de contrôle électronique (27) sont placés à l'intérieur d'un récipient (23) qui supporte une sortie (30) d'un signal électrique, dans lequel la sonde (5) porte une pluralité de trous de pression totale (6), placés sur sa surface avant par rapport à la direction d'écoulement aériforme, lesdits trous de pression totale (6) sont équipés avec de larges biseaux et une pluralité de trous de pression statique (8) placés sur une surface latérale par rapport à la direction de l'écoulement, la totalité des trous de pression totale (6) et de pression statique (8) étant perpendiculaires sur la surface de la sonde (5) au point auxquels ils sont appliqués, et dans lequel ladite sonde (5) est fermée au niveau de ses deux extrémités, dont l'une est équipée avec deux prises (15) et (18), et dans lequel la sonde (5) porte un déflecteur de séparation (21) qui crée deux chambres (16, 19) non raccordées l'une à l'autre mais raccordées, par le biais de tubes flexibles (17, 20) sur lesquels des valves de blocage (25, 26) sont placées, au transducteur (24) ; dans lequel les manchons de fixation (9, 10) et les plaques de régulation (11, 12) forment ensemble un système de rotation de la sonde (5) qui tourne par rapport à la direction d'écoulement de l'air ; dans lequel une source d'écoulement d'air de balayage est sélectionnée à partir d'un ventilateur (28) placé à l'intérieur du récipient (23), ou une source d'écoulement d'air raccordée à l'extérieur du dispositif ; dans lequel les valves (25, 26, 29) sont placées à l'intérieur du récipient (23) et dans lequel la sortie (30) du signal électrique est utilisée en tant que signal de rétroaction par un inverseur, équipé d'un organe de commande PID, ledit organe de commande PID commandant un ventilateur (2).

2. Dispositif selon la revendication 1, **caractérisé en ce que** le déflecteur de séparation (21) de la sonde (5) a son axe incliné par rapport à l'axe vertical de la sonde (5).

3. Dispositif selon la revendication ou 2, **caractérisé en ce que** la sonde (5) est réalisée dans des matériaux choisis à partir de plastiques, de composites et d'alliage d'aluminium extrudé.

4. Dispositif selon l'une quelconque des revendications 1 à 3, **caractérisé en ce que** les fentes (22) sont au nombre de trois, placées à 120° le long d'une circonférence des planques de régulation (11, 12).

5. Dispositif selon l'une quelconque des revendications 1 à 4, **caractérisé en ce que** la source d'écoulement d'air de balayage comprend un ventilateur (28) placé à l'intérieur du récipient (23).

6. Dispositif selon l'une quelconque des revendications 1 à 4, **caractérisé en ce que** la source d'écoulement d'air de balayage comprend un réseau à l'extérieur du dispositif.
